# DEMANDE DE BREVET EUROPEEN

(11) **EP 1 072 468 A1**
(43) Date de publication de la demande: **31.01.2001**
(21) Numéro de dépôt: 00402135.8
(22) Date de dépôt: 26.07.2000
(51) Int. Cl.: B60P 7/08

(54) **Combinaison d'un élément fixe et d'un organe d'arrimage de charges sur un véhicule**

(30) Priorité: 28.07.1999 FR 9909794
(71) Demandeur: ASCA CARROSSIER CONSTRUCTEUR, F-78680 Epone (FR)
(72) Inventeur: Momper, Jean-Luc, 27930 La Trinite (FR); Deschamp, Roger, 92500 Rueil Malmaison (FR)
(74) Mandataire: Texier, Christian

(57) **Abrégé**

La combinaison d'un élément fixe (4) de véhicule tel qu'un brancard, et d'un organe d'arrimage (2) apte à être arrimé à l'élément (4), dans laquelle l'élément (4) présente un logement (22) de réception de l'organe de sorte que l'organe ne fait pas saillie hors de l'élément.

## Description

La présente invention concerne les organes d'ancrage à un élément fixe d'un véhicule permettant de stabiliser une charge embarquée sur le véhicule.

On connaît des combinaisons d'un tel organe et d'un tel élément fixe. L'organe est configuré pour être relié à une sangle stabilisant une charge embarquée à bord du véhicule. L'élément fixe qui sert à l'arrimage de l'organe est généralement situé près du plancher du véhicule. Lorsque l'organe est inutilisé, il n'est généralement pas possible de le laisser en engagement avec l'élément fixe car il risque de constituer un obstacle gênant la manutention des charges sur le véhicule. On doit donc stocker l'organe d'arrimage à distance de l'élément. Cela nécessite d'aller le chercher en cas de besoin et en outre accroît le risque de l'égarer.

Un but de l'invention est de fournir une combinaison d'un organe et d'un élément telle que l'organe, lorsqu'il est inutilisé, ne gêne pas la manoeuvre, et réduisant les risques d'égarer l'organe.

En vue de la réalisation de ce but, on prévoit selon l'invention une combinaison d'un élément fixe de véhicule tel qu'un brancard, et d'un organe d'arrimage apte à être arrimé à l'élément, dans laquelle l'élément présente un logement de réception de l'organe de sorte que l'organe ne fait pas saillie hors de l'élément.

Ainsi, on peut loger l'organe dans le logement, notamment lorsque l'organe est inutilisé. Il s'ensuit que l'organe est stocké à l'endroit de sa prochaine utilisation. De plus, il ne gêne pas la manutention à bord du véhicule.

Avantageusement, l'organe d'arrimage comprend un crochet apte à être directement arrimé à l'élément.

Avantageusement, l'organe d'arrimage est apte à être totalement extrait de l'élément.

Ainsi, le montage et le démontage de l'élément sont simplifiés.

Avantageusement, l'organe d'arrimage est apte à être arrimé à une partie de l'élément profilée suivant une direction longitudinale de l'élément.

Ainsi, on peut arrimer l'organe en tout point du profilé, ce qui permet de choisir la position d'arrimage la plus adaptée à la configuration de la charge. Cette caractéristique est particulièrement avantageuse lorsque le profilé s'étend sur une grande partie de la longueur du véhicule. On peut en outre, dans ce cas, associer plusieurs organes d'arrimage à un même élément.

La combinaison selon l'invention pourra également présenter au moins une des caractéristiques suivantes :
- l'organe d'arrimage est apte à être arrimé à une seule partie à la fois de l'élément ;
- la partie s'étend d'un côté de l'organe adaptée à faire face à une charge arrimée par l'organe et embarquée sur le véhicule ;
- la partie est un bord de l'élément fixe ;
- le logement présente une ouverture, une plus grande partie du logement s'étendant du côté d'un bord de l'ouverture auquel l'organe est apte à être arrimé ;
- l'organe d'arrimage présente un orifice traversant ;
- l'organe d'arrimage présente une partie en forme de barre s'étendant à distance d'une partie de l'organe apte à venir directement en prise avec l'élément ;
- l'organe présente une forme profilée courbe à sens de courbure unique ;
- l'élément fixe est un brancard ; et
- le logement reçoit un câble électrique.

D'autres caractéristiques et avantages de l'invention apparaîtront encore dans la description suivante d'un mode préféré de réalisation donné à titre d'exemple non limitatif. Aux dessins annexés :
- la figure 1 et la figure 2 sont des vues respectives de face et de profil d'un organe de la combinaison selon un mode préféré de réalisation de l'invention ;
- les figures 3 à 6 sont des vues en section respectives suivant les plans III-III, IV-IV, V-V, et VI-VI de l'organe des figures 1 et 2 ;
- la figure 7 est une vue en coupe de l'élément de la combinaison recevant l'organe de la figure 1 ;
- la figure 8 est une vue analogue à la figure 7 montrant l'organe arrimé à l'élément ;
- les figures 9 et 10 illustrent deux crochets aptes à être accrochés à l'organe de la figure 1 ;
- la figure 11 est une vue analogue à la figure 7 montrant l'extraction de l'organe d'arrimage ; et
- la figure 12 est une vue de dessus de l'organe et du brancard à l'endroit de l'extraction, la figure 11 étant une vue en coupe suivant le plan XI-XI de la figure 12.

La combinaison selon l'invention comprend dans le présent mode de réalisation un organe 2 et un élément fixe 4 et est destinée à un véhicule utilitaire du type poids lourd.

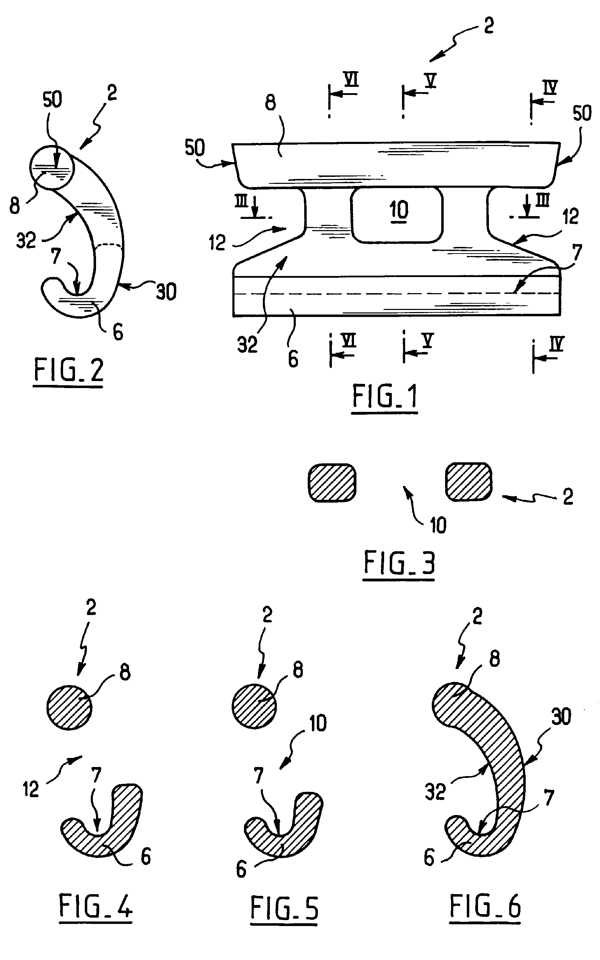

En référence aux figures 2 à 6, l'organe d'arrimage 2 est ici en métal et d'une seule pièce. Il a une forme profilée suivant un axe rectiligne. Le profil est constitué pour l'essentiel par une forme courbe à sens de courbure unique et dont le rayon de courbure croît de façon monotone d'une extrémité à l'autre du profil, de bas en haut sur la figure 2. Ce profil a une forme en portion de spirale. L'organe 2 présente de profil une partie inférieure 6 en forme de crochet qui correspond à la zone de profil de plus petit rayon de courbure. Il présente une partie supérieure 8 qui sert à l'engagement de l'organe 2 avec une autre pièce comme on le verra plus loin.

En vue de face, l'organe 2 présente un orifice central 10 de forme rectangulaire, et deux échancrures latérales 12 s'étendant symétriquement l'une de l'autre de part et d'autre de cet orifice. Au-dessous de l'orifice 10 et des échancrures 12, la partie formant crochet 6 s'étend sur toute la longueur de l'organe. Au-dessus de l'orifice et des échancrures, la partie supérieure 8 forme une barre s'étendant sur toute la longueur de l'organe sur une longueur égale à celle de la partie formant crochet. En vue de face, l'organe 2 a une forme générale en « H » dont la barre serait double.

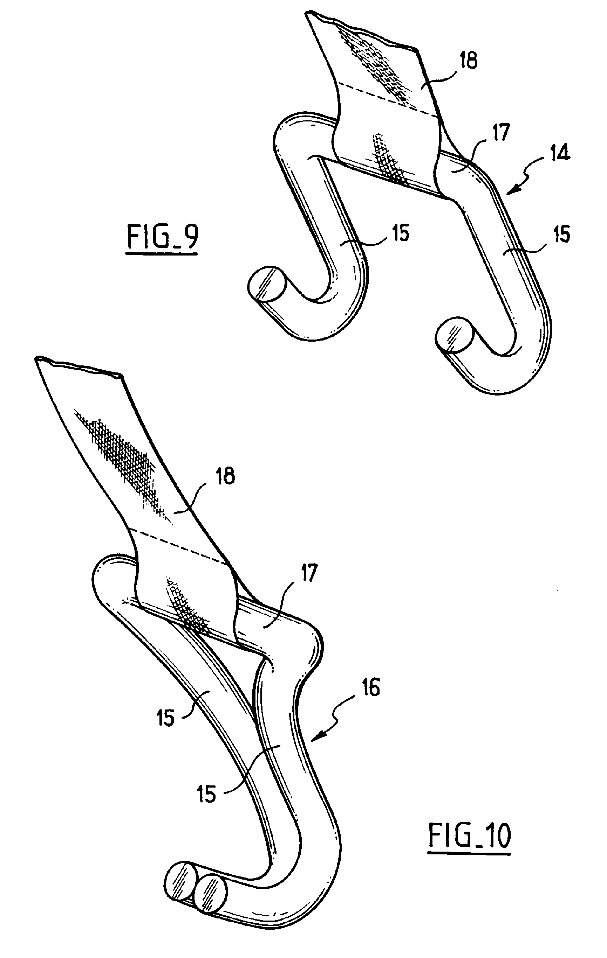

L'organe 2 est configuré pour recevoir en engagement des crochets de sangle 14, 16 illustrés aux figures 9 et 10. Chaque crochet est configuré sous la forme d'une barre repliée en « U », les extrémités des branches 15 du « U » étant recourbées pour former un crochet, une sangle 18 étant fixée à la base 17 du « U ».

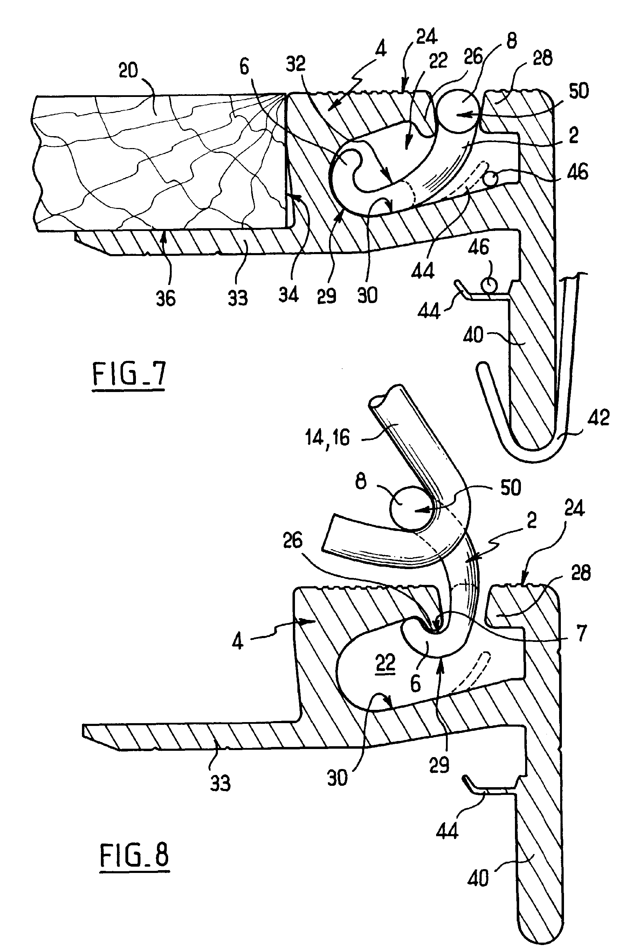

Dans le crochet 14 de la figure 9, les branches 15 sont distantes l'une de l'autre et aptes à venir s'engager sur la partie 8 formant barre, aux extrémités de celle-ci, en traversant les échancrures 12. Au contraire, dans le crochet 16 de la figure 10, les ' branches 15 sont accolées l'une à l'autre et aptes à venir s'engager sur la partie 8 formant barre, au centre de celle-ci, en traversant l'orifice 10. L'engagement de l'organe 2 avec un tel crochet est illustré en figure 8.

En référence aux figures 7 et 8, l'élément fixe 4 est ici formé par un brancard comprenant un profilé métallique s'étendant suivant la direction longitudinale du véhicule et accolé à un plancher de chargement 20 du véhicule. Le brancard 4 présente un logement profilé 22 s'étendant dans le brancard et débouchant sur une face supérieure plane 24 de celui-ci par une ouverture profilée délimitée par deux bords rectilignes 26, 28 en regard l'un de l'autre. Le bord 26 s'étend du côté de l'ouverture situé le plus près du plancher et donc situé du côté de la charge à stabiliser alors que le bord 28 s'étend du côté opposé au plancher. Au-dessous de l'ouverture, le logement 22 s'étend des deux côtés de l'ouverture mais sa plus grande partie s'étend du côté situé vers le plancher 20.

En référence à la figure 7, le logement 22 est apte à recevoir l'intégralité de l'organe 2, en l'espèce lorsque celui-ci est inutilisé. Dans la position de réception, l'organe 2 ne s'étend pas en saillie du brancard 4. La partie formant barre 8 est logée dans l'ouverture entre les deux bords 26, 28. Le reste de l'organe 2 s'étend dans l'ouverture et dans la partie du logement située du côté du plancher. La face externe courbe convexe 29 de l'organe 2 est appuyée contre le fond 30 du logement opposé à l'ouverture. La face externe courbe concave 32 de l'organe fait face au bord 26.

On a illustré en figure 8 l'organe 2 en position arrimée sur le brancard, ici avec un crochet 14, 16 engagé dans l'organe 2. Une plus grande partie de l'organe 2 s'étend hors du logement 22. Une petite partie de l'organe 2 s'étend dans le logement et à travers l'ouverture. La partie 6 formant crochet est en prise avec le bord 26 qui, à cette fin, s'étend en saillie en direction du fond 30 du logement. Alors que l'organe 2 en position de réception était incliné, il est maintenant essentiellement vertical. L'organe 2 ainsi arrimé au brancard 4 forme un support robuste pour tendre les sangles 18 destinées à immobiliser le chargement du véhicule.

En variante et en référence à la figure 12, la partie formant crochet 6 de l'organe 2 pourra présenter une face interne concave 7 ondulée ou striée pour améliorer l'immobilisation de l'organe en prise avec le bord du brancard, notamment pour éviter son glissement le long du brancard.

Lorsque l'organe 2 n'est plus utilisé, il suffit de le repousser dans le logement 22 pour l'y installer, comme sur la figure 7. On l'en tire partiellement en cas de nouvelle utilisation. Compte tenu de la position de réception de l'organe dans le logement à l'état inutilisé, il suffit en fait de tirer sur l'organe pour le mettre automatiquement en prise avec le bord 26. La partie formant barre 8 présente deux faces d'extrémités longitudinales 50 inclinées en direction de la partie formant crochet. Cette inclinaison en contre dépouille par rapport au sens d'extraction facilite la préhension manuelle de l'organe 2 lorsqu'il est en position de réception.

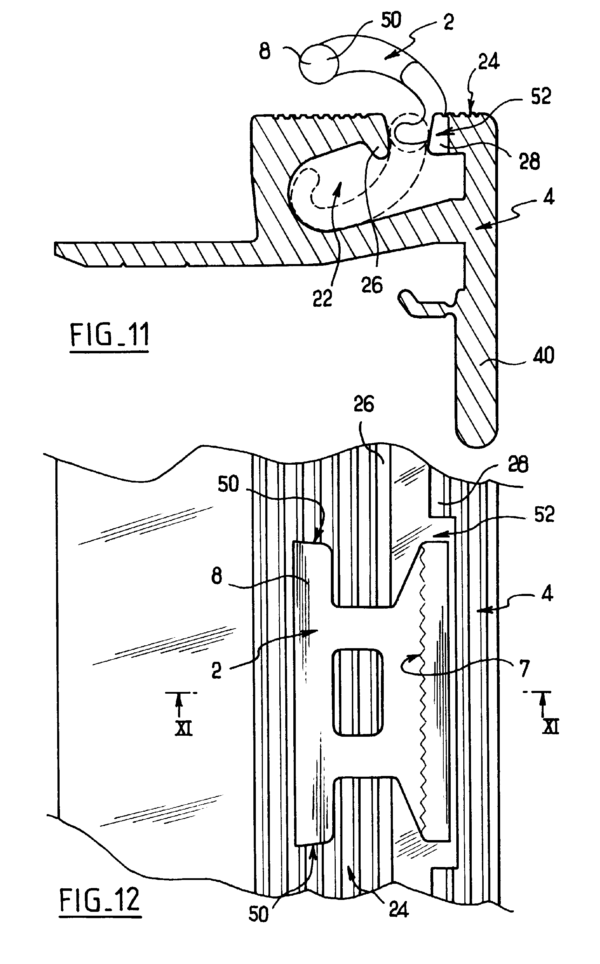

Dans la partie courante du brancard, le profil du brancard ne permet pas d'extraire l'organe 2. Mais le brancard présente une ouverture d'extraction 52 illustrée aux figures 11 et 12 suffisamment large pour permettre d'extraire totalement l'organe, par exemple pour le réparer, le remplacer, ou pour nettoyer le logement. Cette ouverture 52 est par exemple aménagée près de l'extrémité avant du véhicule. Elle a ici la forme d'une échancrure s'étendant dans au moins l'un des bords 26, 28, ici dans le bord 28 opposé au plancher. Pour extraire l'organe 2, on incline l'organe 2 horizontalement du côté du plancher. L'organe 2 peut néanmoins venir en prise avec le brancard au niveau de l'ouverture d'extraction 52.

La forme profilée du bord 26 et de l'ouverture permet de positionner l'organe 2 en tout point de la longueur du brancard 4, en position optimale pour l'immobilisation des charges.

Le brancard présente ici un épaulement profilé 33 accueillant des faces latérale 34 et inférieure 36 du plancher. Il présente également un prolongement 40 vers le bas à partir de sa face latérale externe, permettant par exemple l'accrochage d'un crochet 42 de bâche. Une face interne de ce prolongement peut présenter une tablette profilée 44 apte à supporter un câble électrique 46 de connexion de feux latéraux du véhicule. Toutefois, en variante, une telle tablette 44 peut s'étendre dans le logement 22, par exemple dans sa partie située du côté opposé au plancher 20 pour loger un tel câble 46 entre la tablette et le fond 30 du logement.

Bien entendu, on pourra apporter à l'invention de nombreuses modifications sans sortir du cadre de celle-ci. L'organe 2 pourra être configuré pour venir en prise avec le bord 28.

L'élément fixe pourra être un élément de pavillon ou de paroi latérale du véhicule. Il pourra s'étendre perpendiculairement à la direction de marche du véhicule. L'élément sera le plus souvent accessible depuis l'intérieur du véhicule.

La combinaison selon l'invention pourra comprendre plusieurs organes d'arrimage associés au même élément.

## Revendications

1. Combinaison d'un élément fixe (4) de véhicule tel qu'un brancard, et d'un organe d'arrimage (2) apte à être arrimé à l'élément (4), caractérisé en ce que l'élément (4) présente un logement (22) de réception de l'organe de sorte que l'organe ne fait pas saillie hors de l'élément.

2. Combinaison selon la revendication 1, caractérisée en ce que l'organe d'arrimage (2) comprend un crochet (6) apte à être directement arrimé à l'élément (4).

3. Combinaison selon la revendication 1 ou 2, caractérisée en ce que l'organe d'arrimage (2) est apte à être totalement extrait de l'élément (4).

4. Combinaison selon l'une quelconque des revendications 1 à 3, caractérisée en ce que l'organe d'arrimage (2) est apte à être arrimé à une partie (26) de l'élément profilée suivant une direction longitudinale de l'élément.

5. Combinaison selon l'une quelconque des revendications 1 à 4, caractérisée en ce que l'organe d'arrimage (2) est apte à être arrimé à une seule partie (26) à la fois de l'élément (4).

6. Combinaison selon l'une des revendications 4 ou 5, caractérisée en ce que la partie (26) s'étend d'un côté de l'organe (2) adaptée à faire face à une charge arrimée par l'organe et embarquée sur le véhicule.

7. Combinaison selon l'une quelconque des revendications 4 à 6, caractérisée en ce que la partie (26) est un bord de l'élément fixe.

8. Combinaison selon l'une quelconque des revendications 1 à 7, caractérisée en ce que le logement (22) présente une ouverture, une plus grande partie du logement s'étendant du côté d'un bord (26) de l'ouverture auquel l'organe (2) est apte à être arrimé.

9. Combinaison selon l'une quelconque des revendications 1 à 8, caractérisée en ce que l'organe d'arrimage (2) présente un orifice traversant (10).

10. Combinaison selon l'une quelconque des revendications 1 à 9, caractérisée en ce que l'organe d'arrimage (2) présente une partie en forme de barre (8) s'étendant à distance d'une partie (6) de l'organe apte à venir directement en prise avec l'élément (4).

11. Combinaison selon l'une quelconque des revendications 1 à 10, caractérisée en ce que l'organe (2) présente une forme profilée courbe à sens de courbure unique.

12. Combinaison selon l'une quelconque des revendications 1 à 11, caractérisée en ce que l'élément fixe (4) est un brancard.

13. Combinaison selon l'une quelconque des revendications 1 à 12, caractérisée en ce que le logement (22) reçoit un câble électrique (46).
